# EUROPEAN PATENT APPLICATION

(11) **EP 3 416 143 A1**
(43) Date of publication of application: **19.12.2018**
(21) Application number: 17750313.3
(22) Date of filing: 09.02.2017
(51) Int. Cl.: G07G 1/12, G06Q 50/12

(54) **PRODUCT DATA REGISTRATION TERMINAL, PRODUCT DATA REGISTRATION METHOD AND PRODUCT DATA REGISTRATION PROGRAM**

(30) Priority: 09.02.2016 JP 2016022935
(71) Applicant: Recruit Co., Ltd., Chuo-ku Tokyo 1040061 (JP)
(72) Inventor: KIKUKAWA, Fumitaka, Tokyo 100-6640 (JP); KAGE, Yuichiro, Tokyo 100-6640 (JP); SAIJO, Kohei, Tokyo 100-6640 (JP); WAKABAYASHI, Kazutoshi, Tokyo 100-6640 (JP)
(74) Representative: EIP
(86) International application number: PCT/JP2017/004671
(87) International publication number: WO 2017/138592

(57) **Abstract**

The present invention reduces an effort required for registering menu data. A menu image including a product name and a price is displayed; a frame for designating a range for character recognition in the menu image is displayed on the image according to an operation of a user; an operation designating whether the content within the frame corresponds to a product name or a price is accepted; an object to be recognized, contained in the image within the frame, is converted into text data using character recognition processing specialized for pattern recognition of the content designated by the accepted operation; the converted text data are input and displayed in an input field provided correspondingly to the designated content, out of input fields provided on a menu registration screen; and menu data including product name data and price data are registered in a menu information DB based on the data input to the input field on the menu registration screen.

## Description

### Cross-Reference to Related Applications

This application is based on Japanese Application Number (Japanese Patent Application No. 2016-022935) filed on February 9, 2016, the contents of which are incorporated herein by reference.

### Technical Field

The present invention relates to a product data registration terminal, a product data registration method, and a product data registration program.

### Background Art

The following Patent Document 1 discloses a system that performs accounting processing using a cashier terminal installed in a restaurant.

### Citation List

### Patent Document

Patent Document 1: Japanese Patent Application Laid-Open No. 2013-137657

### Summary

### Technical Problem

Products and prices offered by each store in the restaurant are generally different from each other. Therefore, in a case where a cashier terminal for each store is installed and used as in Patent Document 1, it is necessary to preliminarily register menu data (product data) for each store on each cashier terminal. In a case where menu data is registered on a cashier terminal, a registration representative makes a registration for each product while looking at the menu for each store. That is, before the system is used, a work of inputting and registering the product and the price is repeated by the number of products, which requires an effort. The existence of such a preliminary work may lead to a hindrance in introducing the system.

### Solution to Problem

The present invention has been made to solve the aforementioned problems, and an object of the present invention is to provide a product data registration terminal, a product data registration method, and a product data registration program in which an effort required for registering product data may be reduced.

According to an aspect of the present invention, there is provided a product data registration terminal including: means for displaying an image including a product name and a price; means for displaying a frame for designating a range for character recognition in the image according to an operation of a user, on the image; means for accepting an operation for designating whether the content within the frame corresponds to product name or the price; means for converting an object to be recognized included in an image within the frame to text data by using character recognition processing specialized for pattern recognition of content designated by the accepted operation; means for inputting and displaying the converted text data in an input field provided correspondingly to the designated content, out of input fields provided in a registration screen area for registering product data; and means for registering product data including product name data and price data in a storage unit, based on data input to the input field provided in the registration screen area.

The means for displaying may provide an input field to be provided in the registration screen area according to the number of rows of the converted text data.

The image may be an image of a menu.

According to another aspect of the present invention, there is provided a product data registration method including: by a terminal that is operated by a user, displaying an image including a product name and a price; displaying a frame for designating a range for character recognition in the image according to an operation of a user on the image; accepting an operation for designating whether the content within the frame corresponds to the product name or the price; converting an object to be recognized included in an image within the frame into text data by using character recognition processing specialized for pattern recognition of content designated by the accepted operation; inputting and displaying the converted text data in an input field provided correspondingly to the designated content, out of the input fields provided in the registration screen area for registering product data; and registering product data including product name data and price data in a storage unit, based on data input to an input field provided in the registration screen area.

According to still another aspect of the present invention, there is provided a product data registration program which causes a computer to function as: means for displaying an image including a product name and a price; means for displaying a frame for designating a range for character recognition in the image according to an operation of a user, on the image; means for accepting an operation for designating whether the content within the frame corresponds to the product name or the price; means for converting an object to be recognized included in an image within the frame to text data by using character recognition processing specialized for pattern recognition of content designated by the accepted operation; means for inputting and displaying the converted text data in an input field provided correspondingly to the designated content, out of the input fields provided in the registration screen area for registering product data; and means for registering product data including product name data and price data in the storage unit, based on data input to the input field provided in the registration screen area.

### Advantageous Effects of Invention

According to the present disclosure, an effort required for registering product data may be reduced.

### Brief Description of Drawings

Fig. 1 is a diagram illustrating a configuration of a product management system including a store terminal in an embodiment.
Fig. 2 is a diagram illustrating a configuration of a store terminal illustrated in Fig. 1.
Fig. 3 is a diagram illustrating an example of a menu registration screen displayed on a screen of a store terminal.
Fig. 4 is a diagram illustrating an example of a menu registration screen displayed on the screen of a store terminal.
Fig. 5 is a diagram illustrating an example of a menu registration screen displayed on the screen of a store terminal.
Fig. 6 is a diagram illustrating an example of a menu registration screen displayed on the screen of a store terminal.
Fig. 7 is a diagram illustrating an example of a menu registration screen displayed on the screen of a store terminal.
Fig. 8 is a diagram illustrating an example of a menu registration screen displayed on the screen of a store terminal.
Fig. 9 is a flowchart for explaining processing procedures when menu data is registered on a store terminal.

### Description of Embodiments

Hereinafter, embodiments of the present invention will be described in detail with reference to the drawings. The same element is denoted by the same reference sign, and the overlapping description thereof is not repeated.

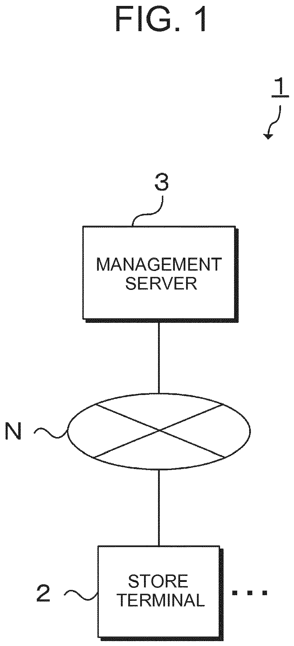

Fig. 1 is a schematic diagram illustrating a configuration of a product management system including a store terminal (product data registration terminal) according to an embodiment of the present invention. The product management system 1 includes one or a plurality of store terminals 2 and a management server 3. The store terminal 2 and the management server 3 are configured to communicate to each other via the network N.

In the present embodiment, an example of the introduction of the store terminal 2 to each store in a restaurant will be described. One or a plurality of store terminals 2 may be provided for each store. In each store, using a menu registration function to be described later, a store clerk registers the product name and price included in the menu of the own store on the store terminal 2 as menu data (product data).

In addition to the menu registration function, for example, the store terminal 2 may have a function to perform order reception processing for registering order content from visited customers using the registered menu data, or accounting processing (for example, sales registration processing, receipt issuance processing) using the registered order content. Each data registered on the store terminal 2 is appropriately transmitted to the management server 3 and is managed in a state in which the store ID and the like are assigned in the management server 3.

In the present embodiment, a tablet terminal is considered as the store terminal 2. However, the store terminal 2 is not limited to this tablet terminal, and for example, a notebook PC (personal computer), a smartphone, a cellular phone, a portable information terminal (PDA), and other terminal apparatus may be appropriately used as the store terminal 2.

The management server 3 includes, for example, a computer having a high computing capability, and realizes a server function by operating a predetermined server program in the computer. Here, the computer for configuring the management server 3 is not necessarily one, and may include a plurality of computers distributed over a network.

The network N includes a communication network in which information may be transmitted and received between the store terminal 2 and the management server 3. The network N may be one of, for example, the Internet, a LAN, a private line, a telephone circuit, an enterprise network, a mobile communication network, Bluetooth (registered trademark), WiFi (Wireless Fidelity), another communication line, a combination thereof, or the like, regardless of wired or wireless one.

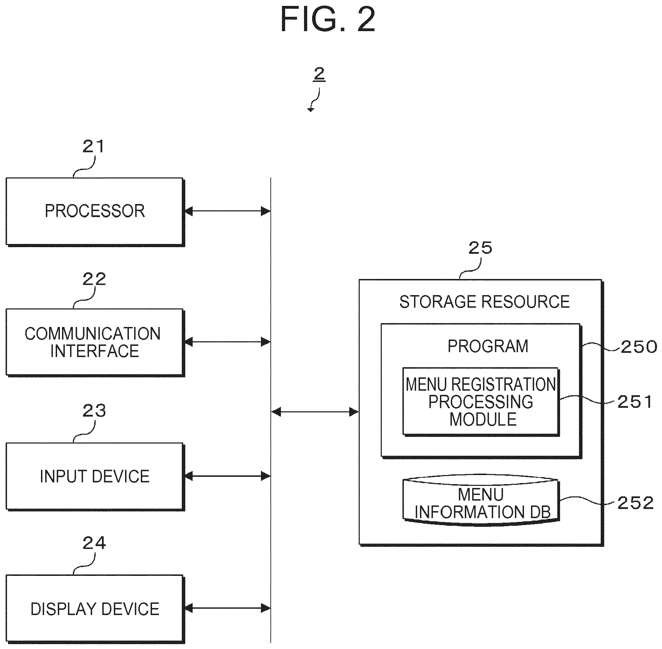

Fig. 2 is a block diagram schematically illustrating the configuration of the store terminal 2. The store terminal 2 includes, for example, a processor 21, a communication interface 22, an input device 23, a display device 24, and a storage resource 25.

The processor 21 includes an arithmetic and logical computing unit and various registers (a program counter, a data register, an instruction register, a general purpose register, and the like), and realizes various functions such as the menu registration function to be described later, by executing the program 250 stored in the storage resource 25. As an example of the program 250, there is an application program (product data registration program) for menu registration installed in the store terminal 2. Hereinafter, the application program is also referred to as a "menu registration application". For example, this application program is downloaded from the management server 3 through the network N and installed on the store terminal 2.

The communication interface 22 provides a connection interface with the management server 3, and includes a wireless communication interface or a wired communication interface. The input device 23 provides an interface for accepting an input operation from the user, and examples thereof include a touch panel, a keyboard, a mouse, and the like. The display device 24 provides the user with an image display interface such as a menu registration screen to be described later, and examples thereof include an organic EL display, a liquid crystal display, a CRT display, and the like. In this embodiment, as an example, a display with a touch panel is used as the input device 23 and the display device 24.

The storage resource 25 is, for example, a logical device provided by a storage area of a physical device. The physical device is, for example, a computer-readable recording medium such as a disk drive or a semiconductor memory. In addition to the program 250, an operating system program, a driver program, various data and the like are stored in the storage resource 25. Examples of the driver program include an input device driver program for controlling the input device 23, an output device driver program for controlling the display device 24, and the like. For example, there is menu data including product name data and price data as various data. The menu data is stored in, for example, a menu information DB 252.

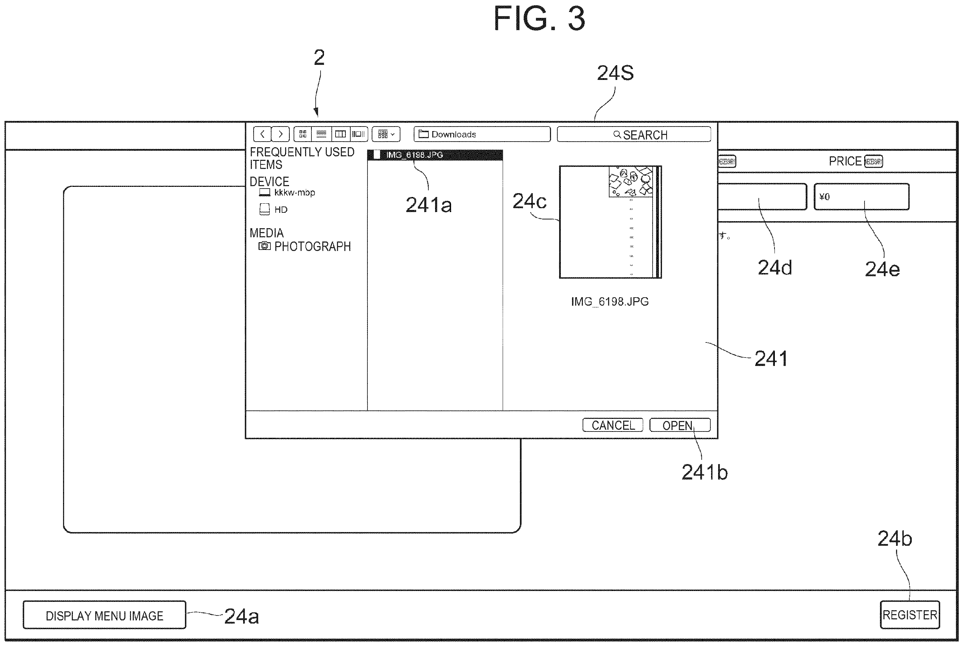

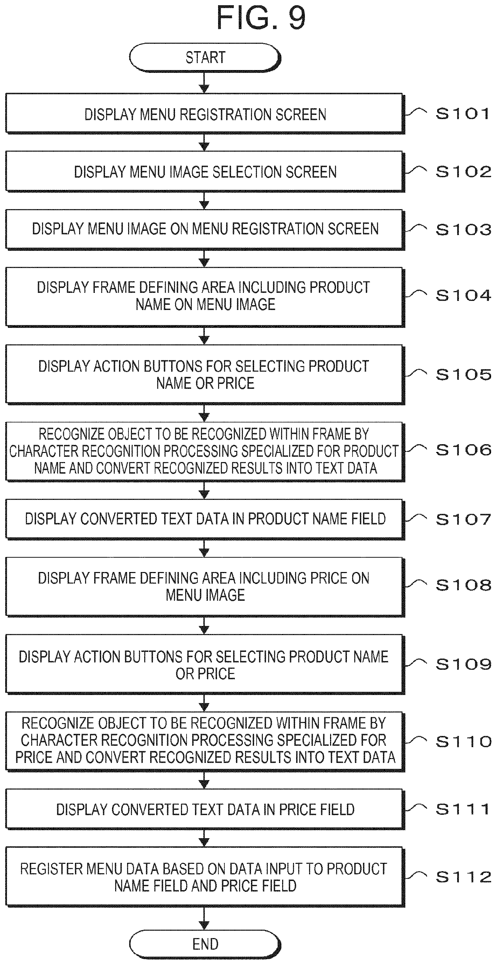

As an example, the program 250 in this embodiment includes a menu registration processing module 251. The menu registration function is implemented by executing this menu registration processing module 251. An example of procedures for registering menu data using the menu registration function will be described with reference to Figs. 3 to 9. Fig. 9 is a flowchart illustrating a flow of basic processing in the store terminal 2 when menu data is registered, and Figs. 3 to 8 are diagrams illustrating an example of a display screen in the store terminal 2 at that time.

First, when an activation request of the menu registration application of the store terminal 2 is accepted in response to an operation of a store clerk who is a user, the menu registration processing module 251 of the store terminal 2 displays the menu registration screen (registration screen area) 24S illustrated in Fig. 3, on the display 24 (step S101). The activation request of the menu registration application is performed by, for example, tapping on (selecting) an icon displayed on the display 24 of the store terminal 2, and the like.

Subsequently, when a display request of a screen for selecting a menu image to be used for menu registration is accepted in response to the operation of the store clerk, the menu registration processing module 251 displays a menu image selection screen 241 illustrated in Fig. 3, on the menu registration screen 24S in a pop-up form (step S102). The menu image is an image obtained by capturing a menu displaying the product name and the price. The display request of the screen for selecting the menu image is made by, for example, tapping on the button 24a for displaying the menu image, or the like.

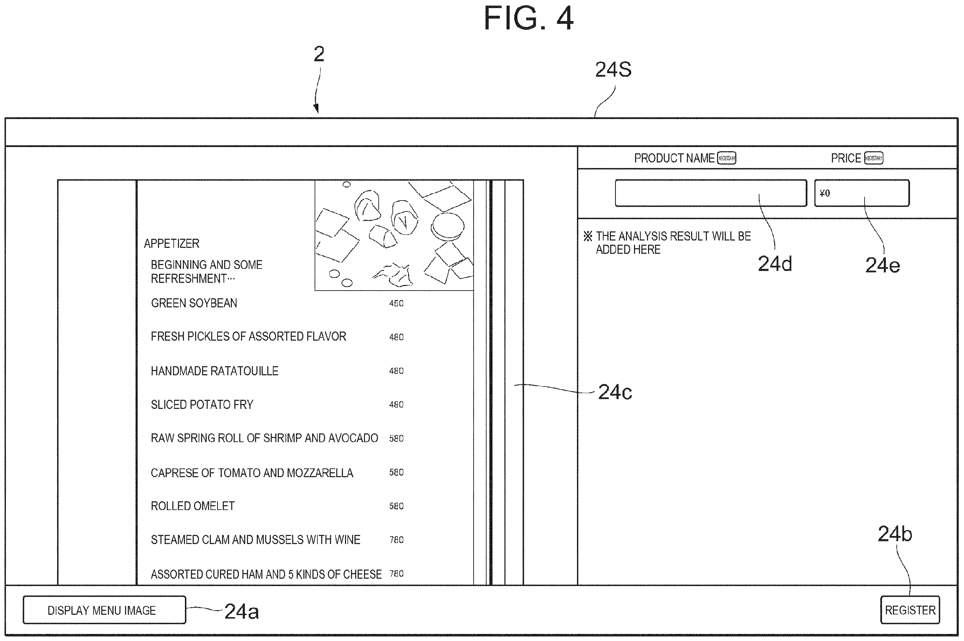

Subsequently, when a selection request of a menu image is accepted in response to the operation of the store clerk, the menu registration processing module 251 displays the selected menu image 24c in the image display area on the menu registration screen 24S as illustrated in Fig. 4 (step S103). The selection request of the menu image is made by, for example, selecting the file name 241a corresponding to the desired menu image 24c on the menu image selection screen 241 illustrated in Fig. 3 and tapping on the open button 241b, or the like.

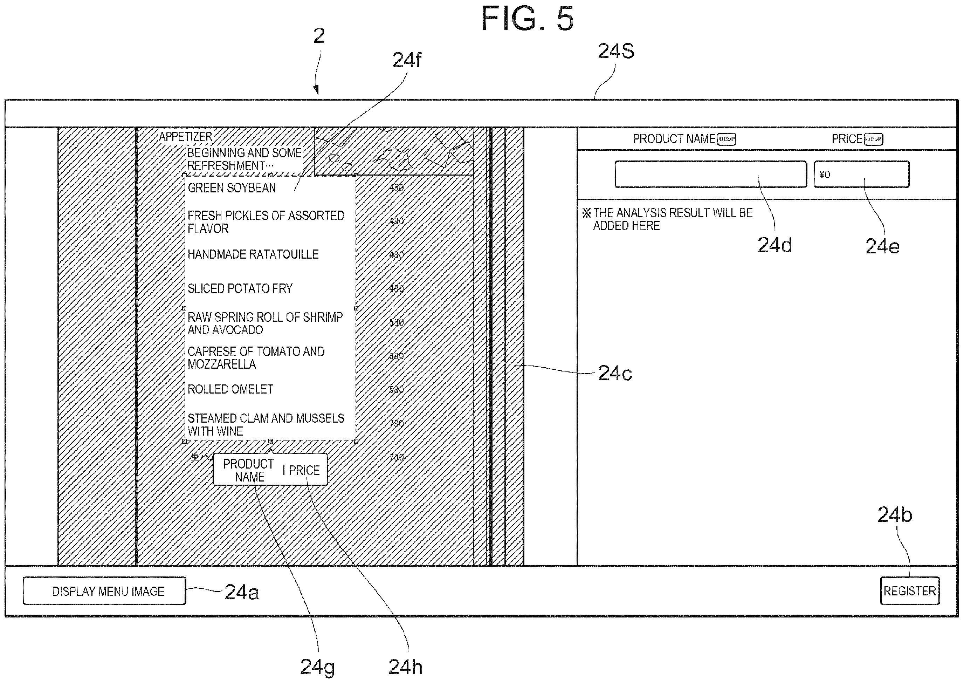

Subsequently, when a range including the product name, out of the menu image, is designated in response to the operation of the store clerk, the menu registration processing module 251 displays a frame 24f defining the designated range on the menu image 24c as illustrated in Fig. 5 (step S104). The designation of the range including the product name is performed by, for example, re-tracing the image to cause the frame to appear, and adjusting the size of the frame using (for example, dragging) a resizing function provided on the frame, or the like.

Subsequently, when setting the frame 24f is completed by the store clerk, the menu registration processing module 251 displays action buttons 24g and 24h for selecting the product name or the price below the frame 24f, as illustrated in Fig. 5 (step S105). Whether setting the frame 24f has completed or not may be determined on, for example, the condition whether a finger has left the display 24 or not. The action buttons 24g and 24h are buttons for instructing the module to execute processing according to the selected content.

Subsequently, in a case where the store clerk selects the action button 24g of the product name, out of the action buttons 24g and 24h, the menu registration processing module 251 character-recognizes an object to be recognized included in the image within the frame 24f, on a row-by-row basis by using character recognition processing specialized for the pattern recognition of the product name and converts the recognized results into text data (step S106).

Here, the contents of the character recognition processing are not particularly limited to this, and may include ones to which, for example, an image recognition system application typified by a general optical character reader (OCR) technology may be applied. In addition, instead of OCR technology, the so-called deep learning technology used for data learning may be applied. Character recognition including such a deep learning technique may be configured to include, for example, steps of image processing, machine learning and language processing (correction of recognition results).

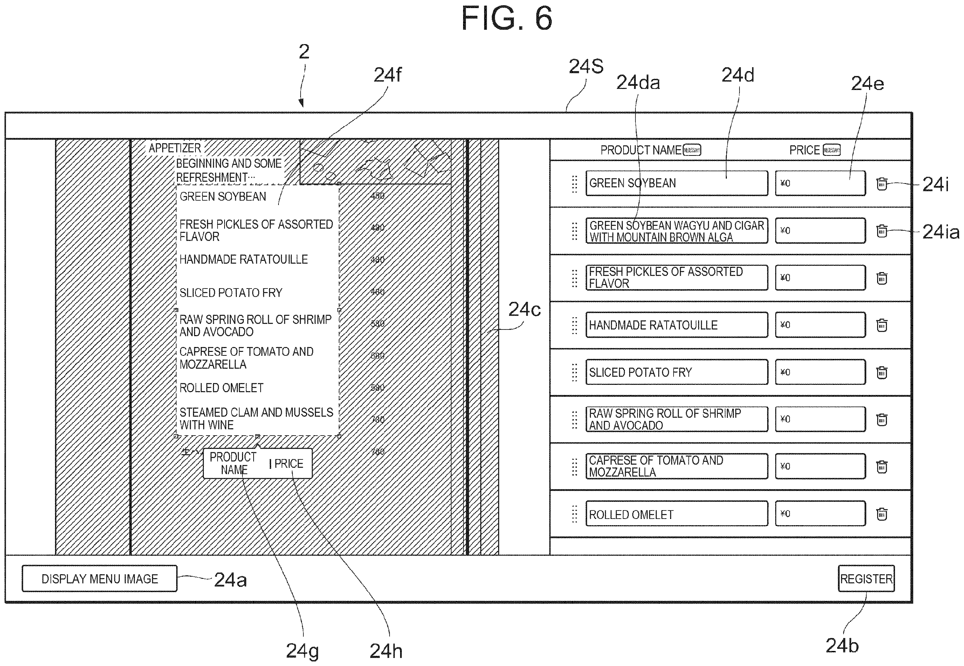

Subsequently, the menu registration processing module 251 sequentially inputs and displays the text data converted in the step S106 in each product name field 24d on the menu registration screen 24S as illustrated in Fig. 6 (step S107). The product name field 24d provided in the menu registration screen 24S is added according to the number of rows of the converted text data.

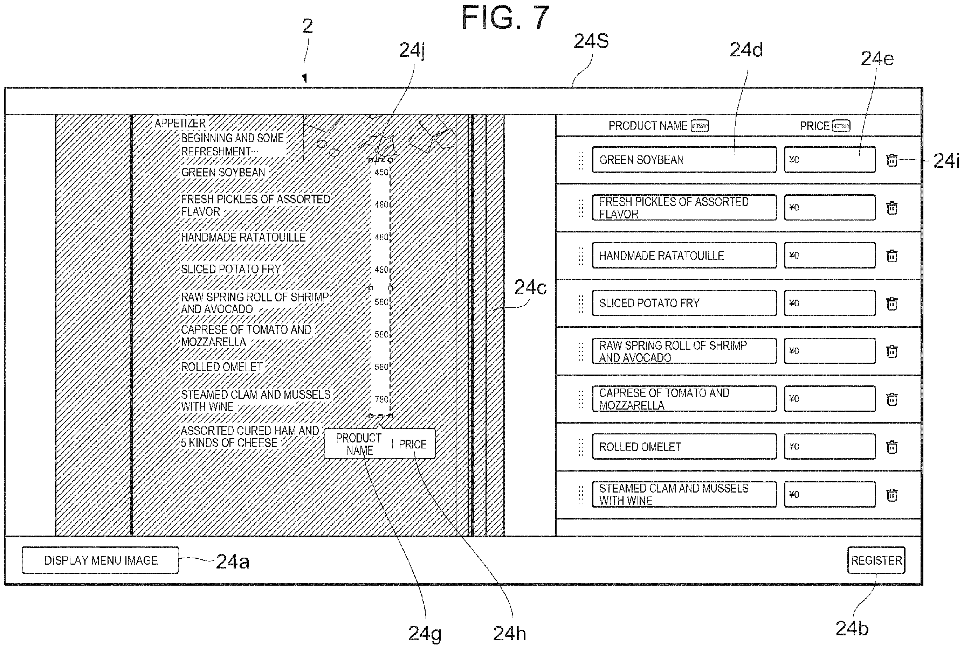

Here, for example, in the product name field 24da as illustrated in Fig. 6, in a case where the product name field 24d having the product name that does not exist in the menu is additionally displayed, it is possible to delete the entire row corresponding to a delete button 24ia by tapping on the delete button 24ia in the same row as the product name field 24d, or the like (see Fig. 7). The contents of the product name field 24d may be optionally changed by the user.

Subsequently, when a range including the price, out of the menu image, is designated in response to the operation of the store clerk, the menu registration processing module 251 displays a frame 24j defining the designated range on the menu image 24c as illustrated in Fig. 7 (step S108). The designation of the range including the price is performed in the same manner as the designation of the range including the aforementioned product name.

Subsequently, when setting the frame 24j is completed by the store clerk, the menu registration processing module 251 displays the action buttons 24g and 24h for selecting the product name or the price below the frame 24j, as illustrated in Fig. 7 (step S109). Whether setting the frame 24j has completed or not, is determined in the same manner as the determination as to whether setting the frame 24f has completed or not.

Subsequently, in a case where the store clerk selects the action button 24h of the price, out of the action buttons 24g and 24h, the menu registration processing module 251 character-recognizes an object to be recognized included in the image within the frame 24j, on a row-by-row basis by using character recognition processing specialized for the pattern recognition of the price and converts the recognized results into text data (step S110).

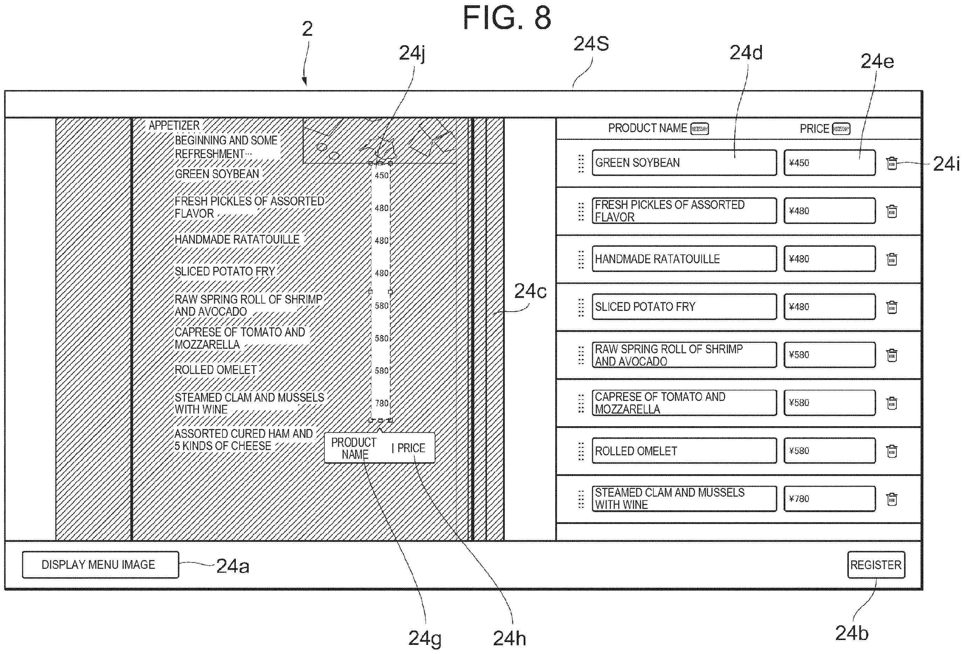

Subsequently, the menu registration processing module 251 sequentially inputs and displays the text data converted in the step S110 into each price field 24e on the menu registration screen 24S as illustrated in Fig. 8 (step S111).

Subsequently, when a registration request of menu data is accepted in response to the operation of the store clerk, the menu registration processing module 251 registers the menu data in the menu information DB 252, based on the data input to the product name field 24d and the price field 24e provided on the menu registration screen 24S (step S112). The registration request of the menu data is made by, for example, tapping on the registration button 24b provided on the menu registration screen 24S, and the like as illustrated in Fig. 8.

As described above, in the store terminal 2 according to the embodiment, the menu image 24c including the product name and the price is displayed, the frames 24f and 24j for designating the range for character recognition in the menu image 24c are displayed on the image 24c according to an operation of a user, and an operation for designating whether the content within the frame corresponds to the product name or the price may be accepted. An object to be recognized included in the image within the frame is converted into text data by using the character recognition processing specialized for pattern recognition of content designated by the accepted operation, and it is possible to input and display the converted text data in an input field corresponding to the designated content, out of input fields 24d and 24e provided on the menu registration screen 24S. Furthermore, it is possible to register menu data including product name data and price data in the menu information DB 252, based on the data input to the input fields 24d and 24e on the menu registration screen 24S.

As a result, since in the store terminal 2 according to the embodiment, an effort required for registering the menu data may be reduced, it is possible to promote the introduction of the system that uses the store terminal 2.

Here, the present invention is characterized by being focused on the following points. In the menu (product price list), the combination of the product and the price is often displayed on a row basis. The characters used for the product may be narrowed to some extent, for example, depending on the type of restaurant, and the characters regarding the price may be narrowed down to numbers. Therefore, in a case where an object to be character-recognized is the product name, the recognition rate of the product name may be improved by performing the character recognition processing using the pattern of the characters used for the product name. On the other hand, in a case where an object to be character-recognized is a price, the recognition rate of the price may be improved by performing the character recognition processing using the pattern of the numbers used for the price.

By taking these points into account, in a case where the frame 24f for designating a display range of the product name is set in the menu image 24c, by selecting and designating that the content within the frame 24f is a product name, the present invention character-recognizes an object to be recognized included in the image within the frame 24f, on a row-by-row basis using character recognition processing specialized for the pattern recognition of the product name, and converts the recognized results into text data.

In a case where the frame 24j for designating the display range of the price is set in the menu image 24c, by selecting and designating that the content within the frame 24j is a price, the present invention character-recognizes an object to be recognized included in the image within the frame 24j, on a row-by-row basis using character recognition processing specialized for the pattern recognition of the price, and converts the recognized results into text data.

The present invention has these character recognition functions, thereby making it possible to reduce an effort required for registering menu data.

Furthermore, in a case where the recognition rate of the product name and the recognition rate of the price are compared, in view of the fact that recognition rate tends to be higher for the price in which the character recognition is performed using the pattern of the numbers, out of the product name and the price included in the menu image 24c, the present invention first character-recognizes the product name and later character-recognizes the price, thereby obtaining the following effects.

For example, as illustrated in Fig. 6, in a case where the product name field 24da of a product not included in the menu is added with misrecognition, when character recognition is performed on the price earlier than the product name, the correspondence relationship between the product name and the price will be shifted after the product name field 24da. In this case, a work of inputting the product name again occurs to solve such a shift.

On the other hand, in a case where character recognition is first performed on the product name, as illustrated in Fig. 6, even if the product name field 24da is added with misrecognition, by selecting the deletion button 24ia in the same row as the product name field 24da to delete the product name field, it is possible to delete the entire unnecessary row, it is possible to prevent occurrence of the work of inputting the product name again, and it is possible to further reduce an effort required for registering the menu data.

The order of character recognition is not limited to the order of character recognition on the product name at first time and character recognition on the price at a later time, and includes the order of character recognition on the price at first time and character recognition on the product name at a later time. This is because, depending on the recognition rate of the product name, it is possible to reduce the possibility that the product name field 24da of a product not included in the menu is added.

### [Modification]

The present invention is not limited to the embodiments described above, and may be implemented in other various forms without departing from the scope of the present invention. Therefore, the above-described embodiments are just examples, and should not be narrowly interpreted. For example, the order of respective processing steps described above may be arbitrarily changed without causing a discrepancy in processing contents, or the processing steps may be executed in parallel.

In the above-described embodiments, a menu image to be used for registering menu is selected from the stored images, but the present invention is not limited to this. For example, an image captured using a camera mounted on the store terminal 2 may be used as a menu image.

In the above-described embodiments, a case of registering the menu data including the product name and the price has been described. However, the present invention is not limited to this, and the present invention may be applied to a case of registering product data including the product name and the price.

The program in the embodiments may be downloaded via various recording media (computer-readable recording media) such as an optical disk such as a CD-ROM, a magnetic disk, a semiconductor memory, or the like, or via a communication network, or the like, and may be installed or loaded.

### Industrial Applicability

The product data registration terminal, the product data registration method, and the product data registration program according to the present invention are suitable to a reduction on an effort required for registering product data.

### Reference Signs List

1: product management system
2: store terminal
3: management server
21: processor
22: communication interface
23: input device
24: display device
24S: menu registration screen
24a: button for displaying menu image
24b: register button
24c: menu image
24d: product name field
24e: price field
24f and 24j: frame
24g and 24h: action button
24i: delete button
25: storage resource
250: program
251: menu registration processing module
252: menu information DB
N: network

## Claims

1. A product data registration terminal comprising:
means for displaying an image including a product name and a price;
means for displaying a frame for designating a range for character recognition in the image according to an operation of a user, on the image;
means for accepting an operation for designating whether the content within the frame corresponds to the product name or the price;
means for converting an object to be recognized included in an image within the frame to text data by using character recognition processing specialized for pattern recognition of content designated by the accepted operation;
means for inputting and displaying the converted text data in an input field provided correspondingly to the designated content, out of input fields provided in a registration screen area for registering product data; and
means for registering product data including product name data and price data in a storage unit, based on data input to the input field provided in the registration screen area.

2. The product data registration terminal according to claim 1,
wherein the means for displaying provides the input fields to be provided in the registration screen area according to the number of rows of the converted text data.

3. The product data registration terminal according to claim 1 or 2,
wherein the image is an image of a menu.

4. A product data registration method comprising:
by a terminal that is operated by a user;
displaying an image including a product name and a price;
displaying a frame for designating a range for character recognition in the image according to an operation of a user on the image;
accepting an operation for designating whether the content within the frame corresponds to the product name or the price;
converting an object to be recognized included in an image within the frame into text data by using character recognition processing specialized for pattern recognition of content designated by the accepted operation;
inputting and displaying the converted text data in an input field provided correspondingly to the designated content, out of input fields provided in the registration screen area for registering product data; and
registering product data including product name data and price data in a storage unit, based on data input to the input field provided in the registration screen area.

5. A product data registration program that causes a computer to function as:
means for displaying an image including a product name and a price;
means for displaying a frame for designating a range for character recognition in the image according to an operation of a user, on the image;
means for accepting an operation for designating whether the content within the frame corresponds to the product name or the price;
means for converting an object to be recognized included in an image within the frame to text data by using character recognition processing specialized for pattern recognition of content designated by the accepted operation;
means for inputting and displaying the converted text data in an input field provided correspondingly to the designated content, out of input fields provided in the registration screen area for registering product data; and
means for registering product data including product name data and price data in the storage unit, based on data input to the input field provided in the registration screen area.
